(19) Europäisches Patentamt
European Patent Office
Office européen des brevets

(11) **EP 1 307 853 B1**

(12) **FASCICULE DE BREVET EUROPEEN**

(45) Date de publication et mention
de la délivrance du brevet:
**04.04.2007 Bulletin 2007/14**

(21) Numéro de dépôt: **01963086.2**

(22) Date de dépôt: **09.08.2001**

(51) Int Cl.:
**G06K 7/00** *(2006.01)*

(86) Numéro de dépôt international:
**PCT/FR2001/002591**

(87) Numéro de publication internationale:
**WO 2002/013124 (14.02.2002 Gazette 2002/07)**

(54) **DETECTION D'UNE SIGNATURE ELECTRIQUE D'UN TRANSPONDEUR ELECTROMAGNETIQUE**

ERFASSUNG DER ELEKTRONISCHEN SIGNATUR EINES ELEKTROMAGNETISCHEN TRANSPONDERS

DETECTION OF AN ELECTRIC SIGNATURE OF AN ELECTROMAGNETIC TRANSPONDER

(84) Etats contractants désignés:
**DE FR GB IT**

(30) Priorité: **09.08.2000 FR 0010476**

(43) Date de publication de la demande:
**07.05.2003 Bulletin 2003/19**

(73) Titulaire: **STMicroelectronics S.A.
92120 Montrouge (FR)**

(72) Inventeur: **WUIDART, Luc
F-83910 Pourrières (FR)**

(74) Mandataire: **de Beaumont, Michel
Cabinet Michel de Beaumont
1, rue Champollion
38000 Grenoble (FR)**

(56) Documents cités:
**EP-A- 0 857 981          WO-A-99/43096**

**Description**

La présente invention concerne des systèmes utilisant des transpondeurs électromagnétiques, c'est-à-dire des émetteurs-récepteurs (généralement mobiles) susceptibles d'être interrogés, sans contact et sans fil, par une unité (généralement fixe) dite borne de lecture et/ou d'écriture. Généralement, les transpondeurs extraient l'alimentation nécessaire aux circuits électroniques qu'ils comportent d'un champ haute fréquence rayonné par une antenne de la borne de lecture-écriture.

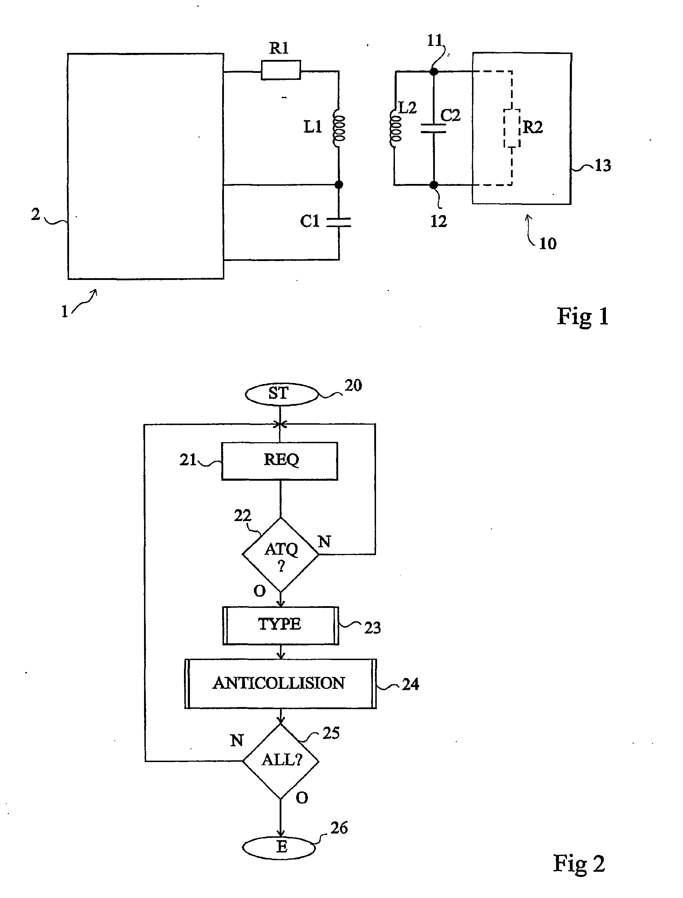

La figure 1 représente, de façon très schématique et simplifiée, un exemple classique de système d'échange de données entre une borne 1 de lecture-écriture et un transpondeur 10 du type auquel s'applique la présente invention.

Généralement, la borne 1 est essentiellement constituée d'un circuit oscillant série, formé d'une inductance L1 en série avec un condensateur C1 et une résistance R1. Ce circuit oscillant série est commandé par un dispositif 2 comprenant, entre autres et de façon non-limitative, un amplificateur ou coupleur d'antenne, et un circuit de commande et d'exploitation des données reçues pourvu notamment d'un modulateur/démodulateur et d'un microprocesseur de traitement des commandes et des données. Le circuit 2 communique généralement avec différents circuits d'entrée/sortie (clavier, écran, moyen d'échange avec un serveur, etc.) et/ou de traitement non représentés. Les circuits de la borne de lecture-écriture tirent l'énergie nécessaire à leur fonctionnement d'un circuit d'alimentation (non représenté) raccordé, par exemple, au réseau de distribution électrique.

Un transpondeur 10, destiné à coopérer avec une borne 1, comporte essentiellement un circuit oscillant parallèle formé d'une inductance L2 en parallèle avec un condensateur C2 entre deux bornes 11, 12 d'entrée d'un circuit 13 de commande et de traitement. Les bornes 11 et 12 sont, en pratique, reliées à l'entrée d'un moyen de redressement (non représenté) dont les sorties constituent des bornes d'alimentation continue des circuits internes au transpondeur. Ces circuits comprennent généralement, essentiellement, un microprocesseur, une mémoire, un démodulateur des signaux éventuellement reçus de la borne 1, et un modulateur pour transmettre des informations à la borne.

Les circuits oscillants de la borne et du transpondeur sont généralement accordés sur une même fréquence correspondant à la fréquence d'un signal d'excitation du circuit oscillant de la borne. Ce signal haute fréquence (par exemple, 13,56 MHz) sert non seulement de porteuse de transmission de données de la borne vers le transpondeur, mais également de porteuse de téléalimentation à destination des transpondeurs se trouvant dans le champ de la borne. Quand un transpondeur 10 se trouve dans le champ d'une borne 1, une tension haute fréquence est engendrée aux bornes 11 et 12 du circuit résonnant du transpondeur. Cette tension, après redressement et écrêtement éventuel, est destinée à fournir la tension d'alimentation des circuits électroniques 13 du transpondeur.

La porteuse haute fréquence émise par la borne est généralement modulée en amplitude par celle-ci selon différentes techniques de codage afin de transmettre des données et/ou des commandes à un ou plusieurs transpondeurs dans le champ. En retour, la transmission de données du transpondeur vers une borne s'effectue généralement en modulant la charge constituée par le circuit résonnant L2, C2. Cette variation de charge s'effectue au rythme d'une sous-porteuse de fréquence (par exemple, 847,5 kHz) inférieure à celle de la porteuse. Cette variation de charge peut alors être détectée par la borne sous la forme d'une variation d'amplitude ou d'une variation de phase au moyen, par exemple, d'une mesure de la tension aux bornes du condensateur C1 ou du courant dans le circuit oscillant.

Lorsqu'elle est au repos, c'est-à-dire lorsqu'aucun transpondeur n'est dans son champ, une borne 1 émet périodiquement un message de données en modulation sur le signal haute fréquence. Ce message est un message d'interrogation à destination de transpondeurs éventuels. Cette interrogation, ou appel général, fait partie d'un processus indispensable à l'initialisation d'une communication entre un transpondeur et une borne.

Une difficulté dans l'établissement d'une communication vers un ou plusieurs transpondeurs est liée au fait que plusieurs transpondeurs électromagnétiques peuvent se trouver simultanément dans le champ de la borne.

Une autre difficulté est que des transpondeurs de différents types ou familles (par exemple, carte de transport, carte d'accès, porte-monnaie électronique) utilisent les mêmes fréquences et, au moins en partie, les mêmes protocoles de communication qui sont normalisés. Par conséquent, une borne doit être capable de déterminer, non seulement le nombre de transpondeurs présents dans son champ, mais également le type de transpondeurs, pour sélectionner celui ou ceux avec lesquels elle doit communiquer.

Ces contraintes imposent un fonctionnement en boucle d'un programme de commande de la borne jusqu'à ce que tous les transpondeurs présents dans son champ aient été correctement identifiés.

La figure 2 représente, de façon très schématique et simplifiée, un organigramme d'initialisation d'une ou plusieurs communications par une borne de lecture-écriture du type auquel s'applique la présente invention.

Après une phase d'allumage, d'initialisation et de test, une borne 1 de lecture-écriture de transpondeurs entame (bloc 20, ST) une procédure de veille pendant laquelle elle attend l'établissement d'une communication avec au moins un transpondeur. Cette procédure consiste, essentiellement, à envoyer périodiquement (bloc 21) une séquence d'interrogation (REQ) à destination des transpondeurs éventuels présents dans le champ de la borne. Après chaque envoi de requête d'interrogation 21, le lecteur surveille (bloc 22) la réception par son démodulateur d'un message de réponse (ATQ) provenant d'un transpondeur entré dans son champ. En absence de réponse, le lecteur se met en boucle sur l'envoi d'une interrogation 21. Lorsqu'il reçoit une réponse ATQ, il passe alors dans un mode de vérification que le transpondeur est bien un transpondeur qui lui est destiné (bloc 23, TYPE) ainsi que dans un mode éventuel d'anti-collision (bloc 24, ANTICOLLISION) pour individualiser les transpondeurs dans son champ. En effet, si plusieurs transpondeurs sont présents dans le champ de la borne, ils peuvent répondre en même temps ou avec un décalage temporel suffisamment faible pour rendre le résultat de la démodulation par le lecteur inexploitable. Celui-ci doit alors soit sélectionner un transpondeur avec lequel il veut communiquer, soit attribuer différents canaux aux différents transpondeurs.

Une communication ne débute que quand le processus d'initialisation et d'anti-collision illustré par la figure 2 est terminé (bloc 26, E), c'est-à-dire quand le lecteur a détecté (bloc 25, ALL) qu'il a identifié tous les transpondeurs présents dans son champ. L'appartenance d'un transpondeur à une famille donnée fait partie de cette identification. Tant que tous les transpondeurs n'ont pas été identifiés, on recommence l'envoi de requêtes d'interrogation. Si un transpondeur a été correctement identifié, celui-ci est placé dans un état où il ne répond plus à ces requêtes d'interrogation pour ne pas polluer la détection des autres transpondeurs éventuels.

Un processus d'initialisation et d'anti-collision tel que décrit brièvement en relation avec la figure 2 est parfaitement connu. On trouve, par exemple, des illustrations de procédés classiques dans les demandes de brevet français N° 2760280 et 2773627.

La mise en oeuvre du procédé illustré par la figure 2 s'effectue le plus souvent en fixant un nombre maximal de cartes susceptibles d'être dans le champ du transpondeur. Comme cela a été décrit, en particulier dans la demande de brevet français N° 2760280, ce nombre peut être modifié, par le lecteur, en fonction des résultats d'exploitation du procédé d'anti-collision (bloc 24) afin d'augmenter les probabilités de détection et de réduire la durée du procédé d'initialisation.

Un inconvénient des systèmes classiques est que les déterminations du nombre et/ou du type de transpondeurs font appel à une émission de messages par les transpondeurs. Pour déterminer la famille du transpondeur, on utilise une comparaison logicielle d'un identifiant que le transpondeur émet. Outre les problèmes de temps d'exécution des programmes, on ne vérifie donc pas si l'identifiant logiciel est émis par un transpondeur ou par un dispositif pirate placé à proximité de la borne.

La présente invention vise à pallier les inconvénients et à résoudre les problèmes posés par les systèmes connus en relation avec l'identification d'un ou plusieurs transpondeurs dans le champ d'une borne.

La présente invention vise notamment à proposer un nouveau mode d'identification d'un transpondeur électromagnétique qui ne soit pas basé sur une analyse d'un message de données émis.

La présente invention vise également à réduire le temps nécessaire à l'initialisation et l'établissement de communications entre une borne de lecture-écriture de transpondeurs électromagnétiques et un ou plusieurs transpondeurs entrés dans son champ. En d'autres termes, l'invention vise à réduire la durée nécessaire à la détermination et à l'identification, par la borne de lecture-écriture, de tous les transpondeurs présents à un instant donné dans son champ.

L'invention vise en outre à proposer une solution qui ne nécessite pas l'utilisation des résultats de détection du démodulateur de la borne.

Pour atteindre ces objets, la présente invention prévoit une borne de génération d'un champ électromagnétique haute fréquence au moyen d'un circuit oscillant, propre à coopérer avec au moins un transpondeur lorsque ce dernier entre dans ce champ, et comportant :

des moyens de régulation de la phase du signal dans le circuit oscillant par rapport à une valeur de référence ; et des moyens pour détecter, à partir d'une mesure du courant dans le circuit oscillant et d'une mesure de la tension aux bornes d'un élément capacitif de ce circuit oscillant, une signature électrique d'un transpondeur.

Selon un mode de réalisation de la présente invention, la signature électrique permet de déterminer le type auquel appartient le transpondeur parmi un ensemble de types identifiés par des paramètres caractéristiques de fabrication.

Selon un mode de réalisation de la présente invention, la borne comporte des moyens pour comparer la signature d'un transpondeur entré dans son champ à au moins un échantillon de signature mémorisé dans une phase d'apprentissage.

Selon un mode de réalisation de la présente invention, la borne comporte des moyens pour déterminer et mémoriser des informations caractéristiques relatives aux tensions aux bornes de l'élément capacitif de son circuit oscillant et aux courants dans ce circuit oscillant, dans plusieurs configurations déterminées de distance séparant un transpondeur témoin de la borne, et pour tenir compte de ces informations caractéristiques pour déterminer la signature du transpondeur.

Selon un mode de réalisation de la présente invention, lesdites informations caractéristiques comprennent, entre autres :

la tension aux bornes de l'élément capacitif lorsque aucun transpondeur n'est présent dans le champ de la borne ;

la tension aux bornes de l'élément capacitif lorsqu'un transpondeur est dans une relation de proximité maximale avec la borne ;

le courant dans le circuit oscillant quand aucun transpondeur n'est présent dans le champ de la borne ; et

le courant dans le circuit oscillant quand un transpondeur est dans une relation de proximité maximale avec la borne.

Selon un mode de réalisation de la présente invention, la détection de signature s'effectue sans interpréter de message de données véhiculé par le champ haute fréquence.

Selon un mode de réalisation de la présente invention, la borne comporte des moyens pour évaluer, à partir de la mesure du courant dans le circuit oscillant, le nombre minimal de transpondeurs présents dans le champ.

Selon un mode de réalisation de la présente invention, la borne comporte en outre des moyens pour, à partir de la mesure de la tension aux bornes de l'élément capacitif du circuit oscillant, évaluer le nombre maximal de transpondeurs présents dans le champ de la borne.

L'invention prévoit également un procédé d'établissement d'au moins une communication entre une borne de génération d'un champ magnétique haute fréquence et un transpondeur électromagnétique, consistant à déterminer le type d'un transpondeur parmi un ensemble de types identifiés par des paramètres électriques caractéristiques, avant échange de message de données entre le transpondeur et la borne.

Selon un mode de réalisation de la présente invention, ladite détermination consiste à comparer le courant mesuré dans le circuit oscillant de la borne et la tension aux bornes d'un élément capacitif de ce circuit oscillant, à des valeurs précédemment calculées et mémorisées pour établir l'ensemble de types identifiés.

Selon un mode de réalisation de la présente invention, le procédé consiste à envoyer périodiquement une séquence d'interrogation jusqu'à ce qu'au moins un transpondeur entrant dans le champ réponde, et à évaluer, à partir de la mesure du courant, un nombre minimal de transpondeurs susceptibles d'être présents dans le champ.

Selon un mode de réalisation de la présente invention, le procédé consiste en outre, à partir de l'évaluation du nombre minimal et d'une mesure de la tension, à évaluer un nombre maximum de transpondeurs susceptibles d'être présents dans le champ de la borne.

Ces objets, caractéristiques et avantages, ainsi que d'autres de la présente invention seront exposés en détail dans la description suivante de modes de réalisation et de mise en oeuvre particuliers faite à titre non-limitatif en relation avec les figures jointes parmi lesquelles :

les figures 1 et 2, décrites précédemment, sont destinées à exposer l'état de la technique et le problème posé ;

la figure 3 représente, sous forme de blocs, un mode de réalisation d'une borne de lecture-écriture de transpondeurs électromagnétiques selon la présente invention ;

la figure 4 est un organigramme simplifié illustrant un mode de mise en oeuvre d'une phase d'apprentissage du procédé d'évaluation du nombre de transpondeurs selon la présente invention ;

la figure 5 est un organigramme illustrant, de façon simplifiée, un premier mode de mise en oeuvre du procédé de détermination du nombre de transpondeurs dans le champ d'une borne selon l'invention ;

la figure 6 représente des caractéristiques d'évolution du courant dans le circuit oscillant d'une borne de l'invention par rapport à la distance à laquelle se trouvent un ou plusieurs transpondeurs, pour illustrer une phase d'apprentissage du procédé d'évaluation du nombre de transpondeurs selon la présente invention ;

la figure 7 est un organigramme simplifié d'une étape du procédé de l'invention illustré par la figure 5 selon un deuxième mode de mise en oeuvre du procédé de l'invention ; et

la figure 8 représente une caractéristique du courant dans le circuit oscillant de la borne en fonction du coefficient de couplage, et une caractéristique de la tension aux bornes du condensateur de ce circuit oscillant, pour illustrer le deuxième mode de mise en oeuvre du procédé de l'invention.

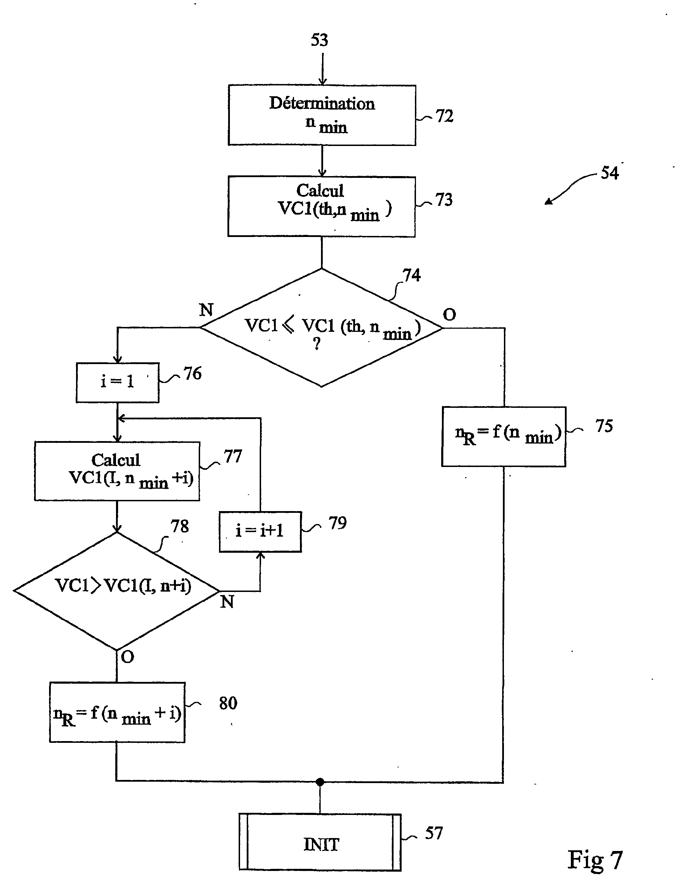

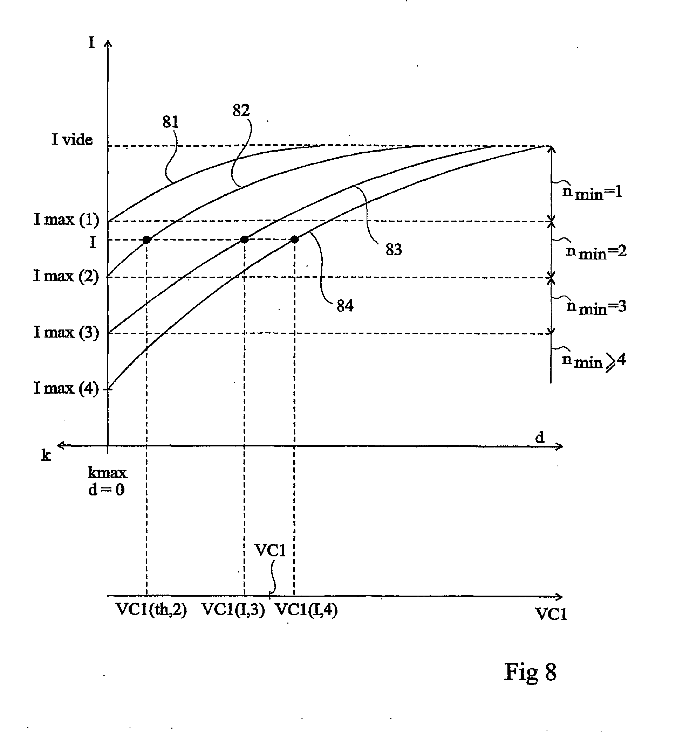

Les mêmes éléments ont été désignés par les mêmes références aux différentes figures. Pour des raisons de clarté, les caractéristiques des figures 6 et 8 ont été tracées sans respect d'échelle et seuls les éléments d'une borne ou d'un transpondeur et les étapes de procédés qui sont nécessaires à la compréhension de la présente invention ont été représentés aux figures et seront décrits par la suite. En particulier, les moyens utilisés pour mettre en oeuvre les calculs dans le procédé de l'invention n'ont pas été détaillés pour être parfaitement classiques. I1 s'agira, par exemple, du microprocesseur dont est généralement pourvue une borne de lecture-écriture. En outre, on fera souvent référence à des "cartes" pour désigner les transpondeurs. L'invention s'applique cependant quel que soit le type de transpondeur, qu'il soit ou non pourvu d'un microprocesseur (carte de type carte de crédit, étiquette électronique, etc.).

Une caractéristique de la présente invention est de prévoir une identification d'une signature dite électrique d'un transpondeur. Chaque type de transpondeur a des caractéristiques électriques qui lui sont propres et qui sont fixées par sa fabrication basée sur les technologies de fabrication des circuits intégrés. Ces caractéristiques sont essentiellement liées aux dimensionnements (forme et taille) des inductance et condensateur du circuit résonnant du transpondeur. Or, une fois le transpondeur fabriqué, ces caractéristiques sont immuables (en négligeant l'influence du vieillissement des composants). De plus, c'est précisément les caractéristiques du circuit résonnant qui influent sur le circuit oscillant d'une borne. Par conséquent, on peut considérer que chaque famille de transpondeur a sa "signature" du point de vue de son circuit oscillant. En outre, on peut tirer profit des dispersions technologiques de ces composants entre différents lots de fabrication pour individualiser des familles de transpondeurs. Ces dispersions sont toutefois négligeables au sein d'un même lot, ou au moins sur une même plaquette.

Une autre caractéristique de la présente invention est de prévoir une détermination de la famille à laquelle appartient le transpondeur présent dans le champ d'une borne de lecture-écriture à partir de mesures physiques effectuées sur le circuit oscillant de la borne. Plus précisément, on compare les valeurs du courant dans le circuit oscillant de la borne et la tension aux bornes du condensateur de ce circuit oscillant, par rapport à des valeurs mesurées et/ou calculées dans une phase d'apprentissage précédant la mise en fonctionnement de la borne.

Selon la présente invention, la détermination du type de transpondeur s'effectue (en amont du démodulateur) sans nécessiter l'exploitation du signal de données reçues (c'est-à-dire en aval du démodulateur de la borne). L'invention prévoit d'évaluer ce nombre à partir des seules déterminations électriques de courant et de tension, et de calculs de ces grandeurs.

La détermination de la famille à laquelle appartient un transpondeur sans qu'il soit nécessaire d'interpréter (de démoduler) un message de données améliore considérablement la sécurité du système. En effet, pour être "accepté" par la borne, le transpondeur doit présenter les mêmes caractéristiques qu'un transpondeur témoin. On impose ainsi que le transpondeur pirate ait la même structure (fabriqué de la même manière sous forme intégrée) qu'un transpondeur valide. Or, il est plus difficile de reproduire des caractéristiques électriques intrinsèques (liées à la technologie et au procédé d'intégration utilisés) que des caractéristiques de messages de données. On réduit ainsi considérablement les risques de fraude.

Une autre caractéristique de la présente invention est de prévoir une régulation de la phase du circuit oscillant de la borne par rapport à une valeur de référence. Selon l'invention, cette régulation de phase est effectuée au moyen d'une boucle. Le temps de réponse de cette boucle est choisi suffisamment long afin de ne pas gêner la rétromodulation éventuelle provenant d'un transpondeur, et suffisamment court devant la vitesse de passage d'un transpondeur dans le champ de la borne. On peut parler de régulation statique par rapport aux fréquences de modulation (par exemple, la fréquence de la porteuse de téléalimentation de 13,56 MHz, et la fréquence de rétromodulation de 847,5 kHz utilisée dans la transmission de données du transpondeur vers la borne).

La régulation de phase permet une exploitation fiable des mesures de grandeurs physiques effectuées. En effet, la charge constituée par un transpondeur sur le circuit oscillant dépend de la distance séparant ce transpondeur de la borne. Or, la plage de variation, évaluée aux bornes du condensateur du circuit oscillant de la borne (condensateur C1, figure 1), dépend de l'accord de ce circuit oscillant ainsi que de l'accord du circuit oscillant du transpondeur sur la fréquence de la porteuse de téléalimentation. Or, dans les circuits classiques, l'accord n'est pas parfait. En particulier, dans la plupart des bornes classiques, l'accord de la fréquence de résonance à la fréquence de la porteuse est effectué manuellement au moyen d'un condensateur variable, une fois la borne fabriquée. On a besoin d'ajuster l'accord, notamment, en raison des tolérances de fabrication des éléments capacitifs et inductifs, pour garantir le point de fonctionnement en phase choisi entre un signal de référence délivré par un oscillateur de la borne et le signal reçu, prélevé par exemple aux bornes du condensateur C1. Un désaccord du circuit oscillant de la borne a plusieurs conséquences et, en particulier, celle de modifier l'amplitude du signal dans ce circuit oscillant et, par voie de conséquence, l'amplitude disponible du signal pour une évaluation éventuelle.

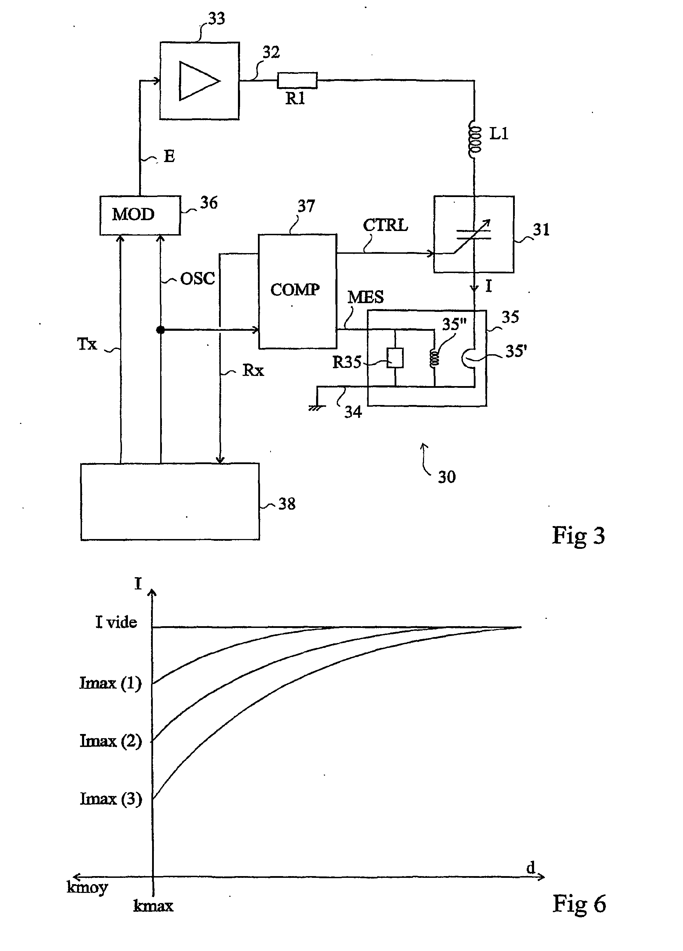

La figure 3 représente, sous forme de blocs, un mode de réalisation d'une borne 30 selon l'invention, équipée d'une boucle de régulation de phase du circuit oscillant.

De façon classique, la borne 30 comporte un circuit oscillant formé d'une inductance ou antenne L1, en série avec un élément capacitif 31 et un élément résistif R1, entre une borne 32 de sortie d'un amplificateur ou coupleur d'antenne 33 et une borne 34 à un potentiel de référence (généralement, la masse). Un élément 35 de mesure du courant dans le circuit oscillant est intercalé, par exemple, entre l'élément capacitif 31 et la masse 34. Cet élément de mesure 35 fait partie de la boucle de régulation de phase qui sera décrite ci-après. L'amplificateur 33 reçoit un signal E de transmission haute fréquence, issu d'un modulateur 36 (MOD) qui reçoit une fréquence de référence (signal OSC) par exemple, d'un oscillateur à quartz (non représenté). Le modulateur 36 reçoit, si besoin, un signal Tx de données à transmettre et, en l'absence de transmission de données depuis la borne, délivre la porteuse haute fréquence (par exemple, à 13,56 MHz) propre à téléalimenter un transpondeur. L'élément capacitif 31 est un élément à capacité variable et commandable par un signal CTRL.

Dans la borne 30, on réalise une régulation de phase du courant dans l'antenne L1 par rapport à un signal de référence. Cette régulation est une régulation du signal haute fréquence, c'est-à-dire du signal de la porteuse correspondant au signal E en l'absence de données à transmettre. Cette régulation est effectuée en faisant varier la capacité du circuit oscillant de la borne 30 de façon à maintenir le courant dans l'antenne en relation de phase constante avec le signal de référence. Ce signal de référence correspond, par exemple, au signal OSC fourni par l'oscillateur du modulateur. Le signal CTRL est issu d'un circuit 37 (COMP) dont le rôle est de détecter l'écart de phase par rapport au signal de référence et de modifier en conséquence la capacité de l'élément 31. La mesure de phase est effectuée, par exemple, à partir d'une mesure du courant I dans le circuit au moyen d'un transformateur d'intensité 35 monté en série avec l'élément 31. Ce transformateur est généralement constitué d'un enroulement primaire 35' entre l'élément 31 et la borne 34 de masse, et d'un enroulement secondaire 35" dont une première borne est connectée directement à la masse 34 et dont l'autre borne délivre un signal MES fournissant le résultat de la mesure. Une résistance R35 de conversion courant-tension est connectée en parallèle avec l'enroulement secondaire 35". Le résultat de la mesure MES est envoyé au comparateur 37 qui asservit en conséquence l'élément capacitif 31 au moyen du signal CTRL.

Selon un mode de réalisation préféré illustré par la figure 3, le comparateur 37 utilise le même démodulateur de phase (non représenté) que celui qui sert à démoduler le signal provenant du transpondeur et que reçoit éventuellement le circuit oscillant. Par conséquent, le comparateur 37 délivre un signal Rx restituant une rétromodulation éventuelle de données reçues d'un transpondeur à un bloc 38 symbolisant le reste des circuits électroniques de la borne.

La réalisation pratique de la boucle de régulation de phase est à la portée de l'homme du métier en recourant à des moyens classiques et à partir des indications fonctionnelles données ci-dessus. En variante au transformateur d'intensité de la figure 3, on pourra utiliser d'autres moyens de mesure classiques. Un exemple de borne à régulation de phase est décrit dans le document EP-A-0857981.

En régulant la phase du circuit oscillant de la borne sur une valeur de référence, on s'affranchit des problèmes éventuels des tolérances de dimensionnement des composants des circuits oscillants et de la dérive de ces composants en fonctionnement. De plus, on permet d'effectuer des mesures fiables relatives au couplage magnétique entre le circuit oscillant de la borne et celui d'un ou plusieurs transpondeurs.

On peut désormais exploiter des mesures de courant et de tension dans le circuit oscillant de la borne pour en déduire, selon l'invention, des informations relatives au type de transpondeur. Ces informations prennent en compte, notamment, le couplage entre chacune des cartes et la borne, c'est-à-dire le coefficient de couplage entre le circuit oscillant de la borne et celui d'une des cartes. Ce coefficient de couplage dépend essentiellement de la distance séparant le transpondeur de la borne. Le coefficient de couplage k entre les circuits oscillants d'un transpondeur et de la borne est toujours compris entre 0 et 1. La distance qui sépare les antennes des circuits oscillants est, en première approximation, proportionnelle à 1-k. Par conséquent, dans la description qui suit, on fera référence soit à la distance soit au coefficient de couplage.

Dans une application de la présente invention où plusieurs transpondeurs sont susceptibles d'être présents en même temps dans le champ d'une borne, une autre caractéristique est de prévoir également une évaluation du nombre de cartes présentes dans le champ de la borne. Selon l'invention, cette détermination s'effectue là encore à partir de mesures physiques effectuées sur le circuit oscillant de la borne. Comme pour la détermination de signature, on évalue le nombre de cartes dans le champ de la borne en comparant les valeurs du courant dans le circuit oscillant de la borne et la tension aux bornes du condensateur de ce circuit oscillant, par rapport à des valeurs mesurées et/ou calculées dans une phase d'apprentissage précédant la mise en fonctionnement de la borne.

L'évaluation de ce nombre de transpondeurs, sans nécessiter l'exploitation du signal de données reçues, permet de réduire considérablement le nombre de boucles du procédé d'initialisation de communication (figure 2). En effet, même si on utilise un procédé adaptant dynamiquement le nombre de boucles à partir des mesures, le nombre initial pris en compte est affiné par rapport à une mise en oeuvre classique.

La présente invention tire son origine d'une interprétation de différentes relations liant les grandeurs électriques mesurables par la borne dans différentes configurations de fonctionnement avec un ou plusieurs transpondeurs.

En particulier, le courant I dans le circuit oscillant série de la borne (par exemple, mesuré par le transformateur 35) est lié à la tension (notée Vg), dite de générateur, excitant le circuit oscillant, et à l'impédance apparente $Z1_{app}$ du circuit oscillant, par la relation suivante :

$$I = \frac{Vg}{Z1_{app}} . \qquad\qquad (formule\ 1)$$

De plus, le fait de réguler la phase du circuit oscillant sur une valeur de référence permet que la variation de distance d'un transpondeur entrant dans le champ de la borne ne se traduise que par une modification de la partie réelle de l'impédance de ce circuit oscillant. En effet, toutes les variations qui auraient tendance à modifier, de façon statique devant les fréquences de modulation, la partie imaginaire, par la charge constituée par le transpondeur (ou les transpondeurs), sont compensées par la boucle de régulation de phase. Ainsi, on s'assure que, en fonctionnement statique, la partie imaginaire de l'impédance $Z1_{app}$ est nulle. Par conséquent, l'impédance $Z1_{app}$ devient égale à la résistance apparente $R1_{app}$ et peut s'exprimer sous la forme :

$$Z1_{app} = R1_{app} = R1 + a^2 \cdot \frac{L2}{R2 \cdot C2}, \qquad \text{(formule 2)}$$

avec :

$$a^2 = \frac{k^2 \cdot \omega^2 \cdot L1 \cdot L2}{X2^2 + \left(\dfrac{L2}{R2 \cdot C2}\right)^2}, \qquad \text{(formule 3)}$$

où $\omega$ représente la pulsation, X2 représente la partie imaginaire de l'impédance du circuit oscillant du transpondeur (X2 = $\omega$L2 - 1/$\omega$C2), et où R2 représente la charge constituée par les constituants du transpondeur sur son propre circuit oscillant, modélisée en figure 1 par une résistance R2 représentée en pointillés en parallèle avec l'inductance L2 et le condensateur C2. En d'autres termes, la résistance R2 représente la résistance équivalente de tous les circuits (microprocesseur, moyen de rétromodulation, etc.) du transpondeur, ramenée en parallèle sur le condensateur C2 et l'inductance L2. Dans la formule 2 ci-dessus, on a négligé la résistance série de l'inductance L1 qui s'ajoute aux deux autres termes. On peut également considérer que la valeur de cette résistance série est, par simplification, incluse dans la valeur de la résistance R1.

Les formules 2 et 3 ci-dessus ont été établies dans le cas où un seul transpondeur est présent dans le champ de la borne. En combinant les formules 1, 2 et 3, on peut exprimer le courant I de la façon suivante :

$$I = \frac{Vg}{R1 + k^2 \cdot \dfrac{\omega^2 \cdot L1 \cdot L2^2}{Z2^2 \cdot R2 \cdot C2}}, \qquad \text{(formule 4)}$$

avec :

$$Z2^2 = X2^2 + \left(\frac{L2}{R2 \cdot C2}\right)^2. \qquad \text{(formule 5)}$$

Des expressions 4 et 5 ci-dessus, seules les valeurs Vg et k sont susceptibles de varier pour une borne donnée et des transpondeurs d'une famille donnée.

Parmi les mesures de grandeurs électriques qui sont aisément réalisables côté borne de lecture-écriture, la présente invention prévoit d'utiliser les valeurs à vide et au couplage maximal qui correspondent aux cas suivants.

Les valeurs à vide représentent le courant et la tension quand aucun transpondeur n'est présent dans le champ de la borne. Dans ce fonctionnement à vide, l'impédance apparente $Z1_{vide}$ du circuit oscillant de la borne ne dépend plus que de ses composants R1, L1 et C1. De plus, comme grâce à la régulation de phase, la partie imaginaire de cette impédance est toujours nulle, on peut écrire :

$$I_{vide} = \frac{Vg}{R1}. \qquad \text{(formule 6)}$$

Par ailleurs, on sait que la partie imaginaire $X1_{app}$ de l'impédance apparente $Z1_{app}$ peut s'exprimer sous la forme :

$$X1_{app} = X1 - a^2 \cdot X2, \qquad \text{(formule 7)}$$

avec :

$$X1 = \omega \cdot L1 - \frac{1}{\omega \cdot C1} . \qquad \text{(formule 8)}$$

Comme cette partie imaginaire $X1_{app}$ est nulle, on peut écrire :

$$X1 = a^2 \cdot X2 , \qquad \text{(formule 9)}$$

A partir de ces relations, on peut exprimer la différence entre les valeurs courante et à vide de la façon suivante :

$$X1 - X1_{vide} = a^2 \cdot X2 - a_{vide}^2 \cdot X2 . \qquad \text{(formule 10)}$$

Or, le coefficient avide est nul dans la mesure où le couplage à vide est nul. De plus, la tension VC1 aux bornes de l'élément 31 (en négligeant l'influence du transformateur d'intensité 35) peut s'écrire I/ωC1, le courant I étant, par exemple, mesuré par le transformateur 35. Il en découle que la formule 10 ci-dessus peut s'écrire :

$$a^2 \cdot X2 = \frac{VC1_{vide}}{I_{vide}} - \frac{VC1}{I} . \qquad \text{(formule 11)}$$

Une autre condition de fonctionnement aisément déterminable correspond au couplage maximal $k_{max}$. Dans cette condition, c'est-à-dire dans une relation de distance minimale entre un transpondeur et la borne (par exemple, le transpondeur étant posé sur la borne le plus près possible de l'antenne L1), la mesure du courant $I_{max}$ dans le circuit oscillant de la borne peut être prise alors qu'un transpondeur de la famille ou type concerné est posé sur la borne.

En appliquant la formule 10 à la valeur courante et au couplage maximal, et en reportant ces applications dans la formule 11, on peut écrire, pour une carte :

$$\frac{a^2 \cdot X2}{a_{max}^2 \cdot X2} = \frac{\dfrac{VC1_{vide}}{I_{vide}} - \dfrac{VC1}{I}}{\dfrac{VC1_{vide}}{I_{vide}} - \dfrac{VC1_{max}}{I_{max}}} . \qquad \text{(formule 12)}$$

Or, en appliquant la formule 3 à la formule ci-dessus, on obtient :

$$\frac{a^2 \cdot X2}{a_{max}^2 \cdot X2} = \frac{k^2}{k_{max}^2} . \qquad \text{(formule 13)}$$

Ainsi, le rapport $k/k_{max}$ entre les coefficients de couplage courant et maximal peut s'exprimer, quand un seul transpondeur est présent dans le champ de la borne, sous la forme :

$$\frac{k}{k_{max}} = \sqrt{\frac{\dfrac{VC1}{I} - \dfrac{VC1_{vide}}{I_{vide}}}{\dfrac{VC1_{max}}{I_{max}} - \dfrac{VC1_{vide}}{I_{vide}}}} \quad . \qquad \text{(formule 14)}$$

En appliquant la formule 11 au couplage maximal $k_{max}$ et en combinant les formules 1, 2 et 6 pour exprimer le coefficient $a_{max}^2$, on peut écrire :

$$\frac{X2 \cdot R2 \cdot C2}{L2} = \frac{\dfrac{VC1_{vide}}{I_{vide}} - \dfrac{VC1_{max}}{I_{max}}}{Vg \cdot \left(\dfrac{1}{I_{max}} - \dfrac{1}{I_{vide}}\right)} \quad . \qquad \text{(formule 15)}$$

Or, pour une famille donnée de transpondeurs, le rapport $\dfrac{X2 \cdot R2 \cdot C2}{L2}$ est constant. De plus, la tension Vg d'exci-tation du circuit oscillant de la borne est fixée. On peut donc définir une constante K2 respectant la relation suivante :

$$K2 = -Vg \cdot \frac{X2 \cdot R2 \cdot C2}{L2} = \frac{\dfrac{VC1_{max}}{I_{max}} - \dfrac{VC1_{vide}}{I_{vide}}}{\left(\dfrac{1}{I_{max}} - \dfrac{1}{I_{vide}}\right)} \quad . \text{(formule 16)}$$

La formule 15 ci-dessus peut s'appliquer à toute valeur du courant I et de la tension VC1 (remplaçant les valeurs au couplage maximal). Par conséquent, en ayant mémorisé, dans une phase d'apprentissage, les tension et courant à vide, ainsi que, pour une famille donnée de transpondeurs, les mêmes grandeurs au couplage maximal, on peut déduire des mesures courantes de ces grandeurs, l'appartenance d'un transpondeur présent dans le champ à cette famille. Il suffit de vérifier que la relation suivante est respectée :

$$\frac{\left(\dfrac{VC1}{I} - \dfrac{VC1_{vide}}{I_{vide}}\right) \cdot \left(\dfrac{1}{I_{max}} - \dfrac{1}{I_{vide}}\right)}{\left(\dfrac{VC1_{max}}{I_{max}} - \dfrac{VC1_{vide}}{I_{vide}}\right) \cdot \left(\dfrac{1}{I} - \dfrac{1}{I_{vide}}\right)} = 1 \quad . \qquad \text{(formule 17)}$$

Si, à l'inverse, le résultat est différent de l'unité, cela signifie que le lecteur a une carte d'un autre type dans son champ (par exemple, provenant d'un autre fabricant).

Dans l'application de l'invention au cas où plusieurs cartes sont susceptibles d'être présentes en même temps dans le champ, la vérification ci-dessus n'est pas suffisante. Il convient alors de sommer les participations respectives des transpondeurs à l'impédance apparente (plus précisément, à la résistance apparente) côté borne. Par conséquent, pour n transpondeurs présents dans le champ de la borne, on peut écrire en appliquant les formules 2 et 3 :

$$Zl_{app} = R1 + \sum_{i=1}^{n} a_i^2 \cdot \frac{L2_i}{R2_i \cdot C2_i} \cdot \qquad \text{(formule 18)}$$

Si on considère que les transpondeurs sont du même type, c'est-à-dire qu'ils présentent les mêmes caractéristiques électriques intrinsèques (L2, R2 et C2), la formule 18 ci-dessus devient :

$$Zl_{app} = R1 + \frac{L2}{R2 \cdot C2} \cdot \sum_{i=1}^{n} a_i^2 \cdot \qquad \text{(formule 19)}$$

Le seul terme alors variable est celui qui dépend du couplage entre les circuits oscillants, donc de la distance entre chaque transpondeur et la borne.
Pour n cartes de même type ayant des coefficients de couplage $k_i$ différents, on peut écrire :

$$\sum_{i=1}^{n} a_i^2 = \frac{\omega^2 \cdot L1 \cdot L2}{Z2^2} \cdot \sum_{i=1}^{n} k_i^2 , \qquad \text{(formule 20)}$$

En première approximation, on peut considérer que, vu de la borne, tout se passe comme si celle-ci voyait n transpondeurs ayant le même coefficient de couplage correspondant à un coefficient de couplage moyen. Par conséquent, on peut arbitrairement définir un coefficient de couplage moyen par carte comme étant donné par la relation suivante :

$$k_{moy}^2 = \sum_{i=1}^{n} \frac{k_i^2}{n} \cdot \qquad \text{(formule 21)}$$

Cela revient à définir un coefficient $a_{moy}$ par la relation suivante :

$$\sum_{i=1}^{n} a_i^2 = n \cdot a_{moy}^2 \cdot \qquad \text{(formule 22)}$$

On peut donc considérer que, pour n cartes ou transpondeurs présents dans le champ de la borne, le courant I mesuré par son transformateur d'intensité dépend du nombre de cartes et de leurs coefficients de couplage respectifs exprimés en fonction d'un coefficient de couplage moyen de la façon suivante :

$$I = \frac{Vg}{R1 + n \cdot k_{moy}^2 \cdot \dfrac{\omega^2 \cdot L1 \cdot L2^2}{Z2^2 \cdot R2 \cdot C2}} \cdot \qquad \text{(formule 23)}$$

Intuitivement, on voit bien que si tous les transpondeurs ont le même coefficient de couplage avec la borne, c'est-à-dire s'ils sont tous à la même distance, le courant I diminue avec une augmentation du nombre de transpondeurs présents dans le champ. De façon similaire, pour un même courant mesuré dans le circuit oscillant de la borne, une diminution du coefficient de couplage de chaque transpondeur implique une augmentation du nombre de transpondeurs dans le champ. En d'autres termes, le produit du nombre de transpondeurs par le carré du coefficient de couplage moyen par transpondeur peut être considéré comme constant.
En considérant que, dans la formule 23 ci-dessus, seules les valeurs Vg, n et $k_{moy}$ sont susceptibles de varier pour une borne donnée et une famille de transpondeurs donnée, et en écrivant cette relation, au couplage maximal, pour une carte et pour n cartes, on peut en déduire :

$$I_{max(n)} = \frac{Vg}{R1 + n \cdot \left(\dfrac{k_{moy}}{k_{max}}\right)^2 \cdot \left(\dfrac{Vg}{I_{max(1)}} - R1\right)} , \quad \text{(formule 24)}$$

avec $I_{max}(1)$ et $I_{max}(n)$ représentant les courants au couplage maximal respectivement pour 1 et n cartes.

En combinant les formules 23 et 24, on obtient la relation suivante :

$$I_{max(n)} = \frac{1}{\dfrac{n}{I_{max(1)}} + \dfrac{1-n}{I_{vide}}} . \quad \text{(formule 25)}$$

Or, comme cela a été indiqué précédemment, les courants à vide et au couplage maximal pour une carte peuvent être mesurés dans une phase d'apprentissage du lecteur (en utilisant une carte échantillon pour le courant au couplage maximal $I_{max(1)}$). Par conséquent, le lecteur est en mesure de calculer les différentes valeurs du courant au couplage maximal pour 2, 3, 4 etc. cartes, le nombre maximal de valeurs calculées étant lié à l'application et au nombre maximal de cartes que l'on estime, dans l'absolu, pouvoir trouver dans le champ du lecteur.

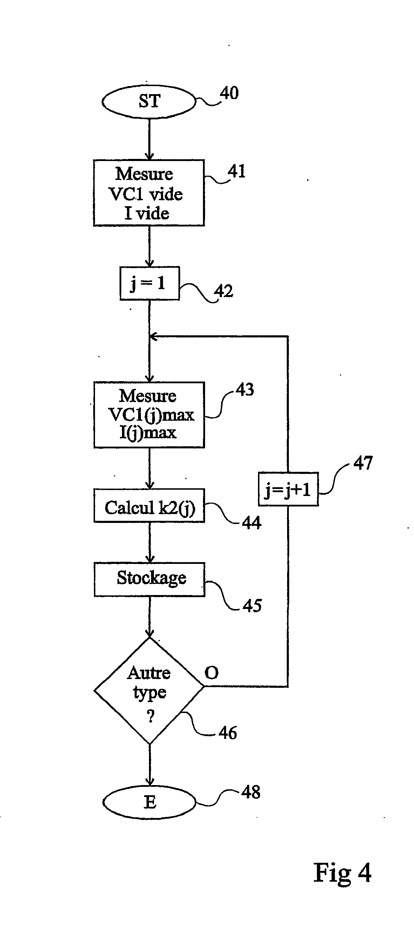

La figure 4 représente un organigramme d'un mode de mise en oeuvre d'une phase d'apprentissage et de préparation selon la présente invention.

Au début (bloc 40, ST), on allume le lecteur et on le configure au moyen de son informatique interne pour une phase d'apprentissage.

Dans une première étape (bloc 41), on mesure et on mémorise les tension et courant à vide $VC1_{vide}$ et $I_{vide}$. Ces mesures sont effectuées alors qu'aucune carte n'est présente dans le champ de la borne.

Dans une deuxième étape, on mesure la tension VC1 et le courant I au couplage maximal pour tous les types de cartes que l'on souhaite que la borne reconnaisse. En figure 4, cela est illustré par l'initialisation d'un indice j (bloc 42), suivie des mesures des grandeurs (bloc 43) en utilisant une carte échantillon que l'on vient placer à distance minimale de la borne, idéalement à distance nulle. Le courant $I(j)_{max}$ est, par exemple, mesuré par un transformateur d'intensité (35, figure 3) tandis que la tension $VC1(j)_{max}$ est mesurée, par exemple, aux bornes du condensateur 31. A partir des grandeurs mesurées aux blocs 41 et 43, les moyens informatiques du lecteur calculent alors (bloc 44) la constante K2(j) de la famille de cartes considérée (ou tout autre valeur appropriée, liée à la constante K2) et on stocke cette grandeur caractéristique de la famille (bloc 45). Tant qu'il reste des types de carte à enregistrer (test 46), le compteur est incrémenté (bloc 47) et on réitère les étapes 43 à 45.

Quand tous les types de transpondeurs ont été enregistrés, la phase d'apprentissage est terminée (bloc 48, E) et le lecteur est en mesure de déterminer, à chaque fois qu'un transpondeur se présentera dans son champ, s'il appartient à un type identifié.

Bien entendu, l'ordre des mesures entre le fonctionnement à vide et au couplage maximal est arbitraire. Les mesures à vide (qui sont indépendantes de la famille ou type de cartes devant fonctionner avec la borne) pourront même être effectuées indépendamment des mesures au couplage maximal (qui pourront être renouvelées, par exemple, pour changer le type des cartes devant fonctionner avec la borne). De plus, n'importe quelle autre grandeur représentative du rapport K2 pourra être mémorisée à la place de celui-ci (par exemple, la valeur K2/Vg).

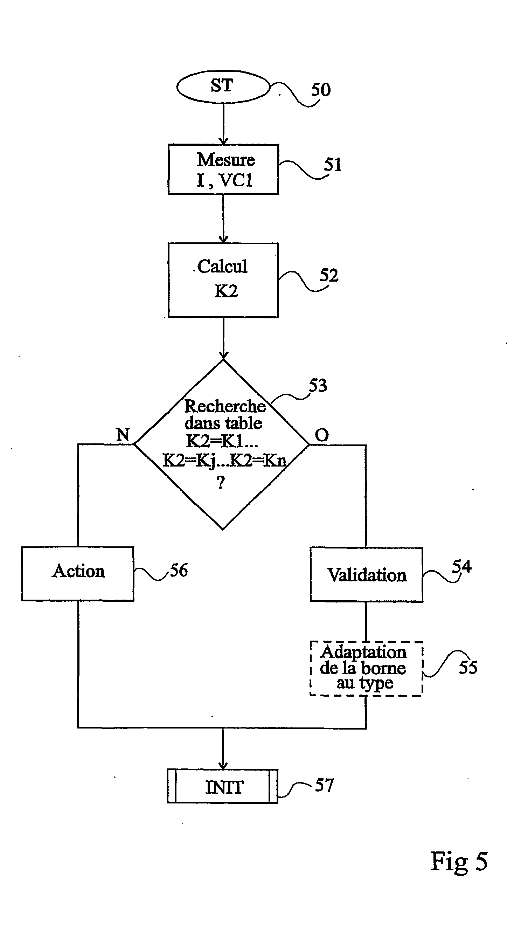

La figure 5 représente un organigramme simplifié d'un mode de mise en oeuvre du procédé d'identification du type de carte selon l'invention.

Selon ce mode de mise en oeuvre, après la fin (bloc 48, figure 4) de la phase d'apprentissage, le lecteur passe dans un mode de fonctionnement d'attente classique où il émet des interrogations périodiques pour surveiller l'apparition d'un transpondeur dans son champ.

Dès que le lecteur a détecté la présence éventuelle d'un transpondeur, il entame une phase de détermination telle qu'illustrée par la figure 5. Après une étape (bloc 50, ST) d'initialisation du programme, on mesure (bloc 51) les valeurs courantes du courant I et de la tension VC1. Puis, on calcule (bloc 52) la constante caractéristique K2 du transpondeur courant. On recherche alors (bloc 53), dans l'ensemble de valeurs mémorisées lors de la phase d'apprentissage, si une des constantes correspond à la valeur courante.

Dans l'affirmative, on valide (bloc 54) la reconnaissance de la carte courante. Cette validation peut être accompagnée d'actions diverses. Par exemple, on pourra adapter (bloc 55) le lecteur au type de carte comme on le verra par la suite, ou se contenter de considérer la validation comme un premier contrôle d'accès au lecteur. Par la suite, on applique un procédé d'anti-collision classique (bloc 57 illustrant l'initialisation INIT d'une transmission).

Si le transpondeur n'est pas reconnu, là encore, plusieurs actions (bloc 56) peuvent être entreprises selon la finalité que l'on souhaite donner à la reconnaissance de l'invention. Par exemple, on peut interdire la poursuite des échanges en bloquant la procédure d'interrogation (bloc 57), considérant alors qu'il s'agit d'un transpondeur pirate. Dans le cas où l'invention est mise en oeuvre uniquement pour adapter le lecteur au type de transpondeur, on se contente de ne pas prévoir d'adaptation particulière. Par la suite, on applique le procédé d'anticollision classique (bloc 57).

Un avantage de la présente invention est qu'elle permet un premier contrôle d'accès à un lecteur qui n'est pas basé sur une démodulation d'un message de données mais sur les caractéristiques électriques intrinsèques du transpondeur. Comme la signature utilisée est de type "électrique", elle est beaucoup plus difficilement falsifiable (le condensateur C2 et la résistance équivalente R2 proviennent d'éléments intégrés dans une puce). En outre, si on considère que les différences intrinsèques des transpondeurs selon leur type ne sont pas suffisantes, on peut facilement prévoir, lors de la fabrication des transpondeurs, de modifier légèrement leurs composants par type pour leur conférer des signatures différentes.

Un autre avantage de l'invention est que ce contrôle d'accès peut être mis en oeuvre avant le début d'un procédé d'initialisation d'une communication et d'anti-collision. En pratique, les mesures et calculs nécessaires à l'invention sont très rapides par les moyens informatiques dont dispose le lecteur.

Un autre avantage de la présente invention est qu'elle permet, le cas échéant, d'adapter le lecteur au transpondeur avec lequel il doit communiquer avant de mettre en oeuvre le procédé d'initialisation d'une transmission. Par exemple, un type de transpondeur peut être dédié à un type de couplage (lointain ou proche) avec un lecteur. Si le lecteur peut supporter plusieurs modes de fonctionnement selon la relation de couplage avec le transpondeur, on peut adapter le lecteur et, plus précisément son circuit oscillant, pour l'adapter au mode de fonctionnement dédié du transpondeur.

En effet, de la phase d'apprentissage, on peut en déduire si le type de transpondeurs est dédié à un fonctionnement en hyperproximité ou en couplage lointain. Par exemple, il est décrit dans les demandes de brevet européen n° 00410077.2 et 00410078.0 de la demanderesse comment dédier structurellement un transpondeur à un fonctionnement respectivement en hyperproximité et en couplage lointain. Cela se traduit par la position du point de couplage optimal $k_{opt}$ du transpondeur par rapport au couplage maximal $k_{max}$, où le couplage optimal $k_{opt}$ est défini comme étant la position de couplage où la tension récupérée par le transpondeur est maximale. On sait que si $k_{opt} < k_{max}$, le transpondeur est dédié à un fonctionnement en hyperproximité. Si $k_{opt} > k_{max}$, le transpondeur est dédié à un fonctionnement en couplage lointain. Or le rapport entre ces deux coefficients de couplage est fonction des courants I à vide et au couplage maximal. En effet, en première approximation, on peut écrire, en combinant les formules 1, 2 et 3 dans lesquelles X2 est, au premier ordre, proche de zéro :

$$\frac{k_{opt}}{k_{max}} = \frac{1}{\sqrt{\dfrac{I_{vide}}{I_{max}} - 1}} . \qquad \text{(formule 26)}$$

Par conséquent, à partir de la phase d'apprentissage, on sait déterminer si le type de transpondeur est dédié à un fonctionnement en hyperproximité ou en couplage lointain.

D'autre part, on peut déduire du rapport K2/Vg la position de la capacité C2 du transpondeur par rapport à la valeur de cette capacité à l'accord $C2_{acc}$, c'est-à-dire quand le circuit oscillant du transpondeur est accordé sur la fréquence de la porteuse de téléalimentation.

En effet, pour une carte présente dans le champ d'un lecteur, on peut écrire :

$$\frac{X2 \cdot R2 \cdot C2}{L2} = R2 \cdot \left( \omega \cdot C2 - \frac{1}{\omega \cdot L2} \right) . \qquad \text{(formule 27)}$$

A partir de cette expression et de la formule 16, on peut écrire :

$$C2 = \frac{1}{\omega^2 \cdot L2} + \frac{\dfrac{VC1_{vide}}{I_{vide}} - \dfrac{VC1_{max}}{I_{max}}}{R2 \cdot Vg \cdot \omega^2 \cdot \left(\dfrac{1}{I_{max}} - \dfrac{1}{I_{vide}}\right)} \,. \text{(formule 28)}$$

Or, lorsque le transpondeur est accordé sur la fréquence de la porteuse de téléalimentation, on a :

$$\omega^2 \cdot C2_{acc} = \frac{1}{\omega^2 \cdot L2} \,. \qquad\qquad \text{(formule 29)}$$

Par conséquent, le terme $\dfrac{\dfrac{VC1_{vide}}{I_{vide}} - \dfrac{VC1_{max}}{I_{max}}}{R2 \cdot Vg \cdot \omega \cdot \left(\dfrac{1}{I_{max}} - \dfrac{1}{I_{vide}}\right)}$ traduit le désaccord du transpondeur.

On peut donc écrire que :

$$C2 = C2_{acc} - \frac{K2}{R2 \cdot Vg \cdot \omega} \,, \qquad\qquad \text{(formule 30)}$$

où le terme $\dfrac{K2}{Vg \cdot \omega}$ donne une image proportionnelle au désaccord du transpondeur. Ce qui précède peut bien entendu être traduit en terme de facteur de qualité Q2 du transpondeur. Dans ce cas, le rapport K2/Vg donne une image proportionnelle à la variation du facteur de qualité.

Par suite, en mesurant le rapport K2/Vg courant d'un transpondeur dans le champ du lecteur, on obtient une information sur la valeur de la capacité du transpondeur par rapport à sa capacité d'accord théorique correspondant au rapport K2/Vg enregistré lors de la phase d'apprentissage.

Dans le cas d'un transpondeur dédié à un fonctionnement en hyperproximité et dont le facteur de qualité est inférieur au facteur de qualité à l'accord, on peut diminuer le facteur de qualité du circuit oscillant du lecteur (par exemple, en augmentant les valeurs de C1 et/ou R1). On augmente alors le débit de la transmission. De plus, en augmentant la valeur de la résistance R1, on réduit la puissance d'émission de la borne, donc sa portée de téléalimentation, ce qui renforce un fonctionnement en hyperproximité.

Si, toujours dans le cas d'un transpondeur dédié à l'hyperproximité, le facteur de qualité Q2 est supérieur au facteur de qualité à l'accord, on peut augmenter la valeur de R1 pour réduire la puissance d'émission et diminuer la portée de téléalimentation.

Dans le cas d'un transpondeur dédié à un fonctionnement en couplage lointain, la borne peut adapter ses valeurs de C1 et de R1 selon qu'il s'agit d'un transpondeur à débit de transmission relativement faible ou élevé.

Plus généralement, on peut profiter de la phase d'apprentissage et de l'utilisation d'un transpondeur témoin pour faire transmettre à la borne par celui-ci des informations relatives à son fonctionnement (par exemple, fonctionnement en hyperproximité ou en couplage lointain, débit de rétromodulation, niveau de tension minimal, taille de la mémoire et type de contenu, type d'identification, etc.). Toutes ces caractéristiques sont alors associées au type de transpondeurs mémorisé dans la borne. Par exemple, cela évite de transmettre ces informations au début de chaque communication entre un transpondeur et la borne.

De manière générale, toutes les actions prises par la borne peuvent être adaptées en fonction des informations préalablement récoltées par la borne lors de la phase d'apprentissage avec un transpondeur témoin de la famille concernée. On peut en particulier combiner les informations extraites de l'identification "électrique" et des informations "logicielles" transmises par le transpondeur à la borne.

Dans une application préférée de l'invention, on évalue également le nombre de transpondeurs présents dans le champ de la borne. Pour ce faire, des calculs supplémentaires sont effectués dans la phase d'apprentissage. Toutefois, comme cela ressortira de la description qui suit, les mesures prises en compte sont les mêmes que celles effectuées pour la détermination du type de transpondeurs.

La figure 6 illustre un exemple de réseau de courbes du courant I dans le circuit oscillant de la borne en fonction de la distance d ou, plus précisément, du coefficient de couplage moyen par carte dans le champ du lecteur. L'échelle du couplage moyen est décroissante vers la droite tandis que l'échelle de distance est croissante vers la droite.

Comme l'illustre le réseau de courbes de la figure 6, le courant maximal au couplage maximal $k_{max}$, c'est-à-dire à distance nulle, diminue avec l'augmentation du nombre de cartes dans le champ de la borne. De plus, toutes les courbes ont sensiblement la même allure et rejoignent l'allure horizontale du courant à vide avec l'augmentation de la distance (ou la diminution du coefficient de couplage moyen par carte). On notera que les courbes ne se croisent pas.

Par conséquent, en mesurant, lors du fonctionnement du lecteur, le courant dans son circuit oscillant, on peut déterminer le nombre minimum de cartes dans le champ en comparant ce courant mesuré aux différentes valeurs calculées pendant la phase d'apprentissage. On notera que, par rapport aux courbes de la figure 6, les calculs de la phase d'apprentissage ne conduisent pas à tracer réellement le réseau de courbes mais simplement à calculer les différents courants maximum possibles.

Pour mettre en oeuvre le calcul du nombre minimal de courbes, on prévoit, dans la phase d'apprentissage (figure 4), une étape supplémentaire (non représentée) dans laquelle on calcule un ensemble de valeurs de courant correspondant au couplage maximal pour plusieurs cartes. Ces valeurs de $I_{max(n>1)}$ correspondent à celles illustrées par la figure 6, le nombre maximal de valeurs calculées dépendant de l'application.

Le lecteur est alors en mesure de déterminer, à chaque fois qu'un ou plusieurs transpondeurs de même type se présenteront dans son champ, le nombre minimal de transpondeurs. Ce nombre permettra d'adapter les procédures d'interrogation et, plus particulièrement, d'adapter le nombre d'étapes d'anti-collision à mettre en oeuvre lors de l'initialisation d'une transmission.

En effet, le test correspondant à la formule 17 ci-dessus peut se généraliser à n cartes de même type. Dans ce cas, les valeurs mesurée VC1 et I1 correspondent à la contribution des n cartes et le test à effectuer est le suivant :

$$\frac{\left( \dfrac{VC1}{I} - \dfrac{VC1_{vide}}{I_{vide}} \right)}{\left( \dfrac{1}{I} - \dfrac{1}{I_{vide}} \right)} = K2 . \qquad \text{(formule 31)}$$

Ce test est effectué à la place du test 53 de la figure 5. Si le résultat est incorrect, cela signifie que l'on est en présence de plusieurs cartes de types différents. On ne peut alors pas déterminer leurs types respectifs à partir des simples mesures de courant et de tension. Dans ce cas, on doit alors recourir au procédé logiciel classique d'interrogation, d'initialisation et d'anti-collision (figure 2).

Si le résultat est correct, cela veut dire que l'on est en présence d'une ou plusieurs cartes du même type. On peut alors mettre en oeuvre un procédé d'évaluation du nombre de cartes selon le mode de réalisation préféré de l'invention et connaître non seulement le type, mais également les nombres minimal et maximal de cartes présentes dans le champ du lecteur.

L'étape de validation 54 (figure 5) correspond alors à une détermination, à partir des valeurs calculées précédemment lors de la phase d'apprentissage, du nombre minimal $n_{min}$ de transpondeurs présents dans le champ de la borne.

Par exemple, si le courant I mesuré est compris entre le courant à vide $I_{vide}$ et le courant maximal pour une carte $I(j)_{max(1)}$ (correspondant à la mesure $I(j)_{max}$ de la phase d'apprentissage, figure 4), deux cas sont possibles. Soit on est en présence d'une seule carte dans le champ du lecteur et cette carte a un couplage k donné (inférieur à $k_{max}$). Soit il y a n cartes dans le champ du lecteur qui ont toutes individuellement des couplages k inférieurs au couplage k du premier cas.

Si le courant mesuré se trouve entre deux valeurs de courant maximum pour n et n+1 cartes, on est sûr qu'il y a au minimum n cartes dans le champ du lecteur. Il peut cependant y avoir plus de n+1 cartes si le couplage moyen par carte est inférieur au cas où seules n cartes sont présentes.

On est alors en mesure de choisir un nombre $n_R$ de cycles d'interrogation dans le procédé d'anti-collision qui est fonction de ce nombre minimal. A partir de ce nombre, on applique alors un procédé d'anti-collision classique.

Un premier avantage qui apparaît déjà avec le mode de réalisation simplifié tel que décrit ci-dessus est qu'en connaissant le nombre minimal de cartes, on peut déjà ajuster le nombre de requêtes d'anti-collision et on gagne donc déjà du temps par rapport au procédé classique.

La figure 7 représente un organigramme simplifié d'un mode de réalisation préféré de la présente invention dans lequel la détermination du nombre de phases d'interrogation du procédé d'initialisation d'une transmission est affinée. L'organigramme de la figure 7 s'imbrique dans celui de la figure 5, par exemple à la place de l'étape de validation 54.

On commence par déterminer (bloc 72) le nombre minimal $n_{min}$ comme dans le procédé simplifié.

Puis, on calcule (bloc 73) un ensemble de valeurs VC1(th, $n_{min}$) correspondant à un ensemble de valeurs théoriques de tensions aux bornes du condensateur C1 (élément 31, figure 3) pour chacun des nombres minima de cartes susceptibles d'être présentes dans le champ de la borne.

Le calcul de ces valeurs théoriques s'effectue de la façon suivante.

Grâce à la boucle de régulation de phase prévue côté lecteur, on peut calculer, pour chaque nombre minimal de cartes déterminé précédemment, la tension théorique aux bornes de l'élément capacitif du lecteur, puis en déduire le nombre maximal de cartes présentes dans le champ.

En effet, la formule 16 établie précédemment pour une carte reste valable pour toute valeur du courant I, de la tension VC1 et du couplage. Par conséquent, la tension VC1 courante peut s'exprimer sous la forme :

$$VC1 = \left( K2 \cdot \left( \frac{1}{I} - \frac{1}{I_{vide}} \right) + \frac{VC1_{vide}}{I_{vide}} \right) \cdot I. \qquad \text{(formule 32)}$$

La constante K2 a été calculée et mémorisée lors de la phase d'apprentissage à partir des valeurs mesurées (blocs 41 et 43, figure 4) .

L'équation 32 ci-dessus reste valable pour plusieurs cartes présentes dans le champ de la borne. Par conséquent, à partir de la mesure courante du courant (bloc 51, figure 5) et de la détermination du nombre minimal de cartes $n_{min}$ (bloc 72), on peut déduire une valeur théorique $VC1_{(th,nmin)}$ de la tension VC1 aux bornes de l'élément capacitif 31 pour $n_{min}$ cartes, en appliquant la relation suivante qui se déduit de la formule 32 :

$$VC1_{(th,n_{min})} = \left( K2 \cdot \left( \frac{1}{I} - \frac{1}{I_{vide}} \right) + \frac{VC1_{vide}}{I_{vide}} \right) \cdot I. \qquad \text{(formule 33)}$$

On est alors en mesure de comparer (bloc 74) la valeur courante de la tension mesurée aux bornes de l'élément 31 à cette valeur théorique calculée pour la zone minimale déterminée précédemment.

Si la tension mesurée est inférieure ou égale à la valeur théorique calculée pour le nombre $n_{min}$, cela signifie que le nombre de cartes présentes dans le champ est égal au nombre minimal. Dans ce cas, on choisit (bloc 75) le nombre $n_R$ de séquences d'interrogation du procédé d'anti-collision à partir de ce nombre $n_{min}$ dont on sait qu'il correspond désormais au nombre exact de transpondeurs.

Si la valeur mesurée est supérieure à la valeur théorique, cela signifie qu'il y a plus de $n_{min}$ cartes dans le champ de la borne.

On passe alors à une autre phase de calculs qui consiste à déterminer, à partir de la mesure de tension, le nombre maximal de cartes présentes dans le champ. Pour cela, on effectue, de façon itérative, le calcul de la tension VC1 qui devrait être obtenue pour correspondre au courant I mesuré pour un nombre de cartes $n_{min}+i$ de plus en plus grand. En effet, comme on a pu déterminer le nombre minimal de cartes et que l'on sait que le nombre réel de cartes ne correspond pas à ce nombre minimal, le nombre de cartes dans le champ de la borne est supérieur au nombre minimal mais le coefficient de couplage moyen de ces cartes est inférieur au coefficient de couplage maximal. Dans le cas contraire, le courant mesuré aurait fourni un nombre minimal de cartes supérieur.

Comme l'illustre l'exemple de réalisation de la figure 7, on initialise (bloc 76) un compteur qui représente l'incrément i supplémentaire par rapport au nombre $n_{min}$ de cartes. En ayant fixé la variable i à 1, on calcule une première valeur de tension VC1 pour le courant I mesuré et le nombre minimal de cartes +1. La relation appliquée pour le calcul de cette valeur (bloc 77) est obtenue de la façon suivante qui sera mieux comprise en relation avec la figure 8.

La figure 8 représente un exemple d'allures du courant I dans le circuit oscillant en fonction de la distance (ou du coefficient k de couplage) associé à une échelle de valeur de la tension VC1 aux bornes de l'élément capacitif 31.

Comme l'illustre cette figure, les calculs (bloc 44, figure 4) effectués lors de la phase d'apprentissage permettent de déterminer des points d'origine de courbes 81, 82, 83 et 84 qui sont tous situés au coefficient de couplage maximal $k_{max}$. Chaque courbe correspond à un nombre croissant de cartes pour un courant décroissant. La mesure (bloc 41) du courant à vide définit l'asymptote des différentes courbes. Le tracé des courants de la figure 8 est à rapprocher du tracé de la figure 6. La détermination des différents points sur l'axe des courants, à la position des coefficients de couplage maximal (ou de distance nulle), permet de déterminer des zones (horizontales dans la représentation de la figure) où le nombre de cartes minimal est différent d'une zone à l'autre. La mesure de la tension VC1 permet, par la suite, de déterminer le nombre maximum de cartes.

Le calcul (bloc 73) de la valeur théorique de la tension, pour le nombre minimal de cartes obtenues à la valeur I du courant mesuré, détermine un point d'intersection qui, dans l'exemple représenté à la figure 8, est sur la courbe 82 représentant l'allure de deux cartes.

Le calcul opéré au bloc 77 de la figure 7 correspond à déterminer les points d'intersection de la ligne du courant I mesuré avec les courbes 83 et 84 correspondant à des nombres de cartes supérieurs.

Après avoir calculé une première valeur VC1 (I,3) pour un incrément i unitaire, on compare la valeur obtenue à la valeur VC1 mesurée (bloc 78). Tant que la valeur VC1 mesurée n'est pas supérieure à la valeur calculée, on augmente l'incrément i (bloc 79) et on refait le calcul pour un nombre de cartes supérieur (valeur VC1 (I, 4)). Dans l'exemple de la figure 8, on suppose que la valeur VC1 mesurée est comprise entre les valeurs pour trois et quatre cartes. En tenant compte du courant mesuré, cela signifie que le nombre de transpondeurs est au maximum de quatre, donc compris entre 2 et 4. On est alors en mesure de fixer (bloc 80) le nombre de requêtes d'interrogation du processus d'anti-collision à ce nombre maximal (ou au nombre maximal +1 pour des questions de sécurité de détermination).

Par suite, que le nombre de requêtes ait été fixé par le bloc 75 ou par le bloc 80, on effectue un processus d'interrogation classique tenant compte de ce nombre (bloc 57).

On notera que, si la représentation de la figure 8 illustre des courbes théoriques complètes, les calculs nécessaires à la mise en oeuvre de l'invention ne concernent que des points de ces courbes qui, en pratique, n'ont pas besoin d'être déterminées de façon précise.

Le calcul de la valeur VC1 (I, $n_{min}$+i) s'effectue à partir de la formule suivante :

$$VC1_{(I, n_{min}+i)} = \left( \frac{n_{min}+i}{n_{min}} \cdot \left( \frac{VC1_{(th, n_{min})}}{I} - \frac{VC1_{vide}}{I_{vide}} \right) + \frac{VC1_{vide}}{I_{vide}} \right) I, \qquad \text{(formule 34)}$$

qui se déduit de l'application de la formule 14 à un coefficient de couplage moyen par carte dans la zone du nombre minimum, en considérant que, pour un courant mesuré donné, le coefficient de couplage moyen est donné par la relation suivante :

$$k^2_{(I, n+i)} = \frac{n_{min}+i}{n_{min}} \cdot k^2_{(I, th, n_{min})}, \qquad \text{(formule 35)}$$

où $k_{(I, th, nmin)}$ désigne le coefficient de couplage moyen par carte correspondant à la valeur $n_{min}$.

Un avantage de la présente invention est qu'il est désormais possible de déterminer au moins le nombre minimal de transpondeurs présents dans le champ.

Dans le mode de réalisation préféré illustré ci-dessus, on détermine même le nombre exact ou, à tout le moins, un nombre maximum de transpondeurs présents dans le champ. La connaissance de ces nombres permet d'adapter les algorithmes d'initialisation d'une communication lorsque au moins un transpondeur répond à une requête d'interrogation émise par une borne.

Le fait de connaître a priori le nombre de cartes dans le champ du lecteur permet d'évaluer le nombre optimal de phases d'interrogation. On peut ainsi réduire jusqu'à optimisation le temps d'échange consacré au protocole d'anti-collision qui doit permettre, soit de sélectionner une carte parmi plusieurs présentées en même temps devant le lecteur, soit d'identifier les cartes dans le champ du lecteur, soit d'autoriser un séquencement de sélection des différentes cartes avec lesquelles le lecteur doit communiquer.

L'adaptation du nombre prévisible de cartes dans le champ du lecteur s'effectue, selon l'invention, dès qu'un transpondeur répond à une requête d'interrogation par la borne. Initialement, on peut prévoir de fixer ce nombre de façon arbitraire ou de façon classique si un nombre prédéterminé est nécessaire pour la mise en oeuvre du procédé d'interrogation.

Dès que le lecteur détecte la présence d'un transpondeur, il effectue la procédure de détermination du type puis du nombre de transpondeurs en utilisant les données calculées lors de l'apprentissage. Pour le reste, on peut recourir à un procédé d'interrogation, d'anti-collision et d'initialisation classiques.

Le nombre $n_R$ de requêtes ne correspond pas nécessairement au nombre maximal ou exact déterminé par l'invention, mais est fonction de ce nombre (par exemple, produit ou quotient par un coefficient prédéterminé, somme ou soustraction d'un nombre prédéterminé).

Bien entendu, la présente invention est susceptible de diverses variantes et modifications qui apparaîtront à l'homme de l'art. En particulier, la mise en oeuvre pratique de l'invention à partir des indications fonctionnelles données ci-dessus est à la portée de l'homme du métier. On notera simplement que celui-ci fera généralement appel aux techniques de programmation habituelles des circuits de traitement numérique présents dans les bornes de lecture-écriture de transpondeurs. Ainsi, l'invention mettant essentiellement en oeuvre des processus de calcul, celle-ci pourra être utilisée avec des modifications mineures d'une borne classique consistant, pour l'essentiel, à disposer des informations de courant et de tension dans le circuit oscillant de la borne.

Parmi les applications de la présente invention, on signalera plus particulièrement les lecteurs (par exemple, les bornes ou portiques de contrôle d'accès, les distributeurs automatiques de produits, les terminaux d'ordinateurs, les terminaux téléphoniques, les téléviseurs ou décodeurs satellites, etc.) de cartes à puce sans contact (par exemple les cartes d'identification pour contrôle d'accès, les cartes porte-monnaie électroniques, les cartes de stockage d'informations sur le possesseur de la carte, les cartes de fidélité de consommateurs, les cartes de télévision à péage, etc.).

## Revendications

**1.** Borne de génération d'un champ électromagnétique haute fréquence au moyen d'un circuit oscillant (R1, L1, 31), propre à coopérer avec au moins un transpondeur lorsque ce dernier entre dans ce champ, **caractérisée en ce qu'**elle comporte :

des moyens (37) de régulation de la phase du signal dans le circuit oscillant par rapport à une valeur de référence ; et
des moyens pour détecter, à partir d'une mesure du courant dans le circuit oscillant et d'une mesure de la tension aux bornes d'un élément capacitif (31) de ce circuit oscillant, une signature électrique (K2) d'un transpondeur, de façon à déterminer le type de transpondeur avant échange de messages de données entre le transpondeur et la borne.

**2.** Borne selon la revendication 1, **caractérisée en ce que** la signature électrique permet de déterminer le type auquel appartient le transpondeur parmi un ensemble de types identifiés par des paramètres caractéristiques de fabrication.

**3.** Borne selon la revendication 1 ou 2, **caractérisée en ce qu'**elle comporte des moyens pour comparer la signature d'un transpondeur entré dans son champ à au moins un échantillon de signature mémorisé dans une phase d'apprentissage.

**4.** Borne selon l'une quelconque des revendications 1 à 3, **caractérisée en ce qu'**elle comporte des moyens pour déterminer et mémoriser des informations caractéristiques relatives aux tensions aux bornes de l'élément capacitif (31) de son circuit oscillant et aux courants dans ce circuit oscillant, dans plusieurs configurations déterminées de distance séparant un transpondeur témoin de la borne, et pour tenir compte de ces informations caractéristiques pour déterminer la signature du transpondeur.

**5.** Borne selon la revendication 4, **caractérisée en ce que** lesdites informations caractéristiques comprennent, entre autres :

la tension aux bornes de l'élément capacitif (31) lorsqu'aucun transpondeur (10) n'est présent dans le champ de la borne (1) ;
la tension aux bornes de l'élément capacitif lorsqu'un transpondeur est dans une relation de proximité maximale ($k_{max}$) avec la borne ;
le courant dans le circuit oscillant quand aucun transpondeur n'est présent dans le champ de la borne ; et
le courant dans le circuit oscillant quand un transpondeur est dans une relation de proximité maximale avec la borne.

**6.** Borne selon l'une quelconque des revendications 1 à 5, **caractérisée en ce que** la détection de signature s'effectue sans interpréter de message de données véhiculé par le champ haute fréquence.

**7.** Borne selon l'une quelconque des revendications 1 à 6, **caractérisée en ce qu'**elle comporte des moyens pour évaluer, à partir de la mesure du courant dans le circuit oscillant, le nombre minimal de transpondeurs présents dans le champ.

8.  Borne selon la revendication 7, **caractérisée en ce qu'**elle comporte en outre des moyens pour, à partir de la mesure de la tension aux bornes de l'élément capacitif (31) du circuit oscillant, évaluer le nombre maximal de transpondeurs présents dans le champ de la borne.

9.  Procédé d'établissement d'au moins une communication entre une borne (1) de génération d'un champ magnétique haute fréquence et un transpondeur électromagnétique (10), **caractérisé en ce qu'**il consiste à réguler la phase du signal dans le circuit oscillant de la borne par rapport à une valeur de référence, et à déterminer, à partir d'une mesure du courant dans le circuit oscillant de la borne et d'une mesure de la tension aux bornes d'un élément capacitif de ce circuit oscillant, le type d'un transpondeur parmi un ensemble de types identifiés par une signature électrique, avant échange de message de données entre le transpondeur et la borne.

10. Procédé selon la revendication 9, **caractérisé en ce** ladite détermination consiste à comparer le courant mesuré dans le circuit oscillant de la borne et la tension aux bornes d'un élément capacitif (31) de ce circuit oscillant, à des valeurs précédemment calculées et mémorisées pour établir l'ensemble de types identifiés.

11. Procédé selon la revendication 9 ou 10, consistant à envoyer périodiquement une séquence d'interrogation (REQ) jusqu'à ce qu'au moins un transpondeur entrant dans le champ réponde, **caractérisé en ce qu'**il consiste à évaluer, à partir de la mesure du courant, un nombre minimal de transpondeurs susceptibles d'être présents dans le champ.

12. Procédé selon la revendication 11, **caractérisé en ce qu'**il consiste en outre, à partir de l'évaluation du nombre minimal et d'une mesure de la tension, à évaluer un nombre maximum de transpondeurs susceptibles d'être présents dans le champ de la borne.

13. Procédé selon l'une quelconque des revendications 9 à 12, **caractérisé en ce qu'**il est appliqué à une borne conforme à l'une quelconque des revendications 1 à 8.

**Claims**

1.  A terminal for generating a high-frequency electromagnetic field by means of an oscillating circuit (R1, L1, 31), adapted to cooperating with at least one transponder when said transponder enters this field, and **characterized in that** it includes:

    means (37) for regulating the signal phase in the oscillating circuit with respect to a reference value; and means for detecting, based on a measurement of the current in the oscillating circuit and on a measurement of the voltage across a capacitive element (31) of the oscillating circuit, an electric signature (K2) of a transponder, so as to determine the type of transponder before exchanging data messages between the transponder and the terminal.

2.  The terminal of claim 1, **characterized in that** the electric signature enables determining a type to which the transponder belongs from among a set of types identified by characteristic manufacturing parameters.

3.  The terminal of claim 1 or 2, **characterized in that** it includes means for comparing the signature of a transponder having entered its field with at least one signature sample memorized during a learning phase.

4.  The terminal of any of claims 1 to 3, **characterized in that** it includes means for determining and memorizing characteristic information relative to the voltages across the capacitive element (31) of its oscillating circuit and to the currents in this oscillating circuit, in several determined configurations of the distance separating a reference transponder from the terminal, and for taking into account this characteristic information to determine the transponder's signature.

5.  The terminal of claim 4, **characterized in that** said characteristic information include, among others:

    the voltage across the capacitive element (31) when no transponder (10) is present in the field of the terminal (1); the voltage across the capacitive element when a transponder is in a relation of maximum closeness ($K_{max}$) with the terminal; the current in the oscillating circuit when no transponder is present in the terminal's field; and the current in the oscillating circuit when a transponder is in a relation of maximum closeness with the terminal.

**6.** The terminal of any of claims 1 to 5, **characterized in that** the signature detection is performed without interpreting any data message carried by the high-frequency field.

**7.** The terminal of any of claims 1 to 6, **characterized in that** it includes means for evaluating, based on the measurement of the current in the oscillating circuit, the minimum number of transponders present in the field.

**8.** The terminal of claim 7, **characterized in that** it further includes means for, based on the measurement of the voltage across the capacitive element (31) of the oscillating circuit, evaluating the maximum number of transponders present in the terminal's field.

**9.** A method for establishing at least one communication between a terminal (1) of generation of a high-frequency magnetic field and an electromagnetic transponder (10), **characterized in that** it consists of regulating the phase of the signal in the oscillating circuit with respect to a reference value; and of determining, from a measure of the current in the oscillating circuit of the terminal and from a measure of the voltage across a capacitive element of said oscillating circuit, a type of a transponder from among a set of types identified by an electric signature, before exchanging any data message between the transponder and the terminal.

**10.** The method of claim 9, **characterized in that** said determination consists of comparing the current measured in the terminal's oscillating circuit and the voltage across a capacitive element (31) of this oscillating circuit with previously calculated and memorized stored values to establish the set of identified types.

**11.** The method of claim 9 or 10, consisting of periodically sending a request sequence (REQ) until at least one transponder entering the field sends an acknowledgement, and evaluating based on the current measurement a minimum number of transponders likely to be present in the field.

**12.** The method of claim 11, **characterized in that** it further consists of, based on the evaluation of the minimum number and on a measurement of the voltage, evaluating the maximum number of transponders likely to be present in the terminal's field.

**13.** The method of any of claims 9 to 12, **characterized in that** it is applied to the terminal of any of claims 1 to 8.


**Patentansprüche**

**1.** Anschlussgerät zur Erzeugung eines elektromagnetischen Hochfrequenzfeldes mittels einer Oszillationsschaltung (R1, L1, 31), geeignet zur Zusammenarbeit mit mindestens einem Transponder dann, wenn der Transponder in dieses Feld eintritt, und **dadurch gekennzeichnet, dass** das Gerät Folgendes aufweist:

Mittel (37) zum Regulieren der Signalphase in der Oszillationsschaltung bezüglich eines Bezugswerts; und Mittel zum Detektieren einer elektrischen Signatur oder Unterschrift (K2) eines Transponders, basierend auf einer Messung des Stroms in der Oszillationsschaltung und auf einer Messung der Spannung an einem kapazitiven Element (31) der Oszillationsschaltung um so den Transpondertyp zu bestimmen, bevor Datennachrichten zwischen dem Transponder und dem Anschlussgerät ausgetauscht werden.

**2.** Anschlussgerät nach Anspruch 1, **dadurch gekennzeichnet, dass** die elektrische Signatur die Bestimmung eines Typs ermöglicht, zu dem der Transponder gehört, und zwar aus einem Satz von durch charakteristische Herstellungsparameter identifizierten Typen.

**3.** Anschlussgerät nach Anspruch 1 oder 2, **dadurch gekennzeichnet, dass** es Mittel aufweist zum Vergleichen der Signatur eines Transponders, der in sein Feld eingetreten ist, mit mindestens einer Signaturprobe, gespeichert während einer Lernphase.

**4.** Anschlussgerät nach einem der Ansprüche 1 bis 3, **dadurch gekennzeichnet, dass** es Mittel aufweist zur Bestimmung und Speicherung charakteristischer Information, relativ zu den Spannungen an dem kapazitiven Element (31) seiner Oszillationsschaltung, und relativ zu den Strömen in dieser Oszillationsschaltung, und zwar in mehreren bestimmten Konfigurationen des Abstandes, der einen Bezugstransponder von dem Anschlussgerät trennt, und wobei die Mittel ferner diese charakteristische Information bei der Bestimmung der Signatur des Transponders berücksichtigen.

**5.** Anschlussgerät nach Anspruch 4, **dadurch gekennzeichnet, dass** die charakteristische Information unter anderem Folgendes aufweist:

die Spannung am kapazitiven Element (31), wenn kein Transponder (10) im Feld des Anschlussgeräts (1) vorhanden ist;
die Spannung am kapazitiven Element, wenn ein Transponder sich in einer Relation maximaler Nähe ($K_{max}$) mit dem Anschlussgerät befindet;
den Strom in der Oszillationsschaltung dann, wenn kein Transponder in dem Feld des Anschlussgeräts vorhanden ist; und
den Strom der Oszillationsschaltung dann, wenn ein Transponder in einer Relation oder Beziehung maximaler Nähe mit dem Anschlussgerät vorhanden ist.

**6.** Anschlussgerät nach einem der Ansprüche 1 bis 5, **dadurch gekennzeichnet, dass** die Signaturdetektion ohne Interpretation irgendeiner Datennachricht enthalten oder geführt durch das Hochfrequenzfeld ausgeführt wird.

**7.** Anschlussgerät nach einem der Ansprüche 1 bis 6, **dadurch gekennzeichnet, dass** Mittel zum Auswerten oder Evaluieren der minimalen Anzahl von im Feld vorhandenen Transpondern vorhanden sind, und zwar basierend auf der Messung des Stroms der Oszillationsschaltung.

**8.** Anschlussgerät nach Anspruch 7, **dadurch gekennzeichnet, dass** ferner Mittel vorgesehen sind um, basierend auf der Messung der Spannung an dem kapazitiven Element (31) der Oszillationsschaltung die maximale Anzahl von Transpondern anwesend in dem Feld des Anschlussgeräts zu evaluieren oder zu ermitteln.

**9.** Verfahren zum Aufbau von mindestens einer Kommunikation zwischen einem Anschlussgerät (1) zur Erzeugen eines Hochfrequenzmagnetfeldes und einem elektromagnetischen Transponder (10), **dadurch gekennzeichnet, dass** Folgendes vorgesehen ist:

Regulieren der Phase des Signals in der Oszillationsschaltung bezüglich eines Referenzwerts; und
Bestimmung aufgrund einer Messung des Stroms in der Oszillationsschaltung des Anschlussgeräts und einer Messung der Spannung an dem kapazitiven Element der Oszillationsschaltung eines Typs eines Transponders aus einem Satz von Typen, identifiziert durch eine elektrische Signatur, und zwar vor dem Austauschen von irgendeiner Datennachricht zwischen dem Transponder und dem Anschlussgerät.

**10.** Verfahren nach Anspruch 9, **dadurch gekennzeichnet, dass** die Bestimmung Folgendes vorsieht:

Vergleichen des Stroms, gemessen in der Oszillationsschaltung des Anschlussgeräts und der Spannung an dem kapazitiven Element (31) dieser Oszillationsschaltung mit zuvor berechneten und gespeicherten Werten, um den Satz von identifizierten Typen aufzubauen oder vorzusehen.

**11.** Verfahren nach Anspruch 9 oder 10, wobei Folgendes vorgesehen ist: periodisches Senden einer Anforderungssequenz (REQ = request sequence) bis mindestens ein in das Feld eintretender Transponder eine Bestätigung sendet und Auswerten, basierend auf der Strommessung einer minimalen Anzahl von Transpondern, die mit Wahrscheinlichkeit im Feld vorhanden sind.

**12.** Verfahren nach Anspruch 11, **dadurch gekennzeichnet, dass** ferner Folgendes vorgesehen ist:

Auswerten der maximalen Anzahl von Transpondern, die wahrscheinlich in dem Feld des Anschlussgerätes vorhanden sind, basierend auf der Auswertung der minimalen Anzahl und auf einer Messung der Spannung.

**13.** Verfahren nach einem der Ansprüche 9 bis 12, **dadurch gekennzeichnet, dass** es auf das Anschlussgerät gemäß einem der Ansprüche 1 bis 8 angewandt wird.

Fig 1

Fig 2

Fig 3

Fig 6

ST    40

Mesure
VC1 vide
I vide    41

j = 1    42

Mesure
VC1(j)max
I(j)max    43

Calcul k2(j)    44

j=j+1    47

Stockage    45

Autre
type
?    O    46

E    48

Fig 4

```
                        ST              50
                         |
                         v
                   ┌──────────┐
                   │  Mesure  │        51
                   │  I , VC1 │
                   └──────────┘
                         |
                         v
                   ┌──────────┐
                   │  Calcul  │        52
                   │    K2    │
                   └──────────┘
                         |
                         v
                        / \
                       /   \           53
                      / Recherche \
                 N   / dans table \   O
                ┌───< K2=K1...      >───┐
                │    \ K2=Kj...K2=Kn/   │
                │     \     ?     /     │
                │      \       /        │
                │       \   /           │
                v        \ /            v
          ┌──────────┐            ┌──────────┐
          │  Action  │  56        │Validation│  54
          └──────────┘            └──────────┘
                │                       │
                │                       v
                │                ┌ ─ ─ ─ ─ ─ ─┐
                │                  Adaptation     55
                │                │ de la borne │
                │                    au type
                │                └ ─ ─ ─ ─ ─ ─┘
                │                       │
                └───────────┬───────────┘
                            v
                      ┌──┬───────┬──┐
                      │  │ INIT  │  │   57
                      └──┴───────┴──┘
```

Fig 5

**Fig 7**

Fig 8